# EUROPÄISCHE PATENTSCHRIFT

(11) **EP 3 284 658 B1**
(45) Veröffentlichungstag und Bekanntmachung des Hinweises auf die Patenterteilung: **26.09.2018**
(21) Anmeldenummer: 17173400.7
(22) Anmeldetag: 30.05.2017
(51) Int. Cl.: B62D 29/00, B60R 1/02, B62J 29/00

(54) **RÜCKSPIEGEL FÜR EIN ZWEIRAD UND VERFAHREN ZU SEINER HERSTELLUNG**
REARVIEW MIRROR FOR A BICYCLE AND METHOD OF PRODUCING SAME
RÉTROVISEUR POUR VÉLO ET SON PROCÉDÉ DE FABRICATION

(30) Priorität: 15.08.2016 DE 102016115110
(43) Veröffentlichungstag der Anmeldung: 21.02.2018
(73) Patentinhaber: Motogadget GmbH, 10997 Berlin (DE)
(72) Erfinder: KELLER, Garrit, 10997 Berlin (DE)
(74) Vertreter: Herrmann, Jochen

(56) Entgegenhaltungen:
- DE-A1- 4 141 391
- DE-A1- 10 102 935
- US-A- 702 763
- US-A- 3 833 198
- US-B1- 6 598 983

## Beschreibung

Die vorliegende Erfindung betrifft ein Verfahren zur Herstellung eines Rückspiegels für ein Zweirad. Der Rückspiegel umfasst ein Gehäuse und eine spiegelnde Fläche. Die Erfindung betrifft ferner einen Rückspiegel für ein Zweirad, umfassend ein Gehäuse und eine spiegelnde Fläche, wobei das Gehäuse zur Befestigung an dem Zweirad mittels eines Befestigungselements ausgebildet ist.

Derartige Zweiradspiegel sind in unterschiedlichen technischen Ausgestaltungen und Designs aus dem Stand der Technik bekannt. Die Rückspiegel werden über ein Befestigungselement, üblicherweise in Form eines Haltearms, an dem Zweirad befestigt. Die Befestigung an dem Zweirad kann dabei an den distalen Enden oder einer beliebigen anderen Stelle der Lenkstange oder aber an einer beliebig anderen Stelle des Zweirads erfolgen. Insbesondere bei Rückspiegeln für Motorräder sind eine Vielzahl unterschiedlicher Designs bekannt. Diese unterscheiden sich in erster Linie durch die verschieden geformten Außenkonturen des Rückspiegelgehäuses. Die Außenkontur bekannter Spiegel kann insbesondere kreisrund, oval, rechteckig, trapezförmig, dreieckig sein oder eine nahezu beliebig andere Form aufweisen.

Die Rückspiegel, wie sie bspw. Aus der US 6,598,983 B1) bekannt sind, weisen neben einem Spiegelgehäuse eine davon separate spiegelnde Fläche, üblicherweise in Form einer Glasscheibe mit einer spiegelnden Beschichtung (Spiegelglas), auf. Das Gehäuse ist aus Kunststoff oder Metall gefertigt. Die spiegelnde Fläche muss in das Gehäuse derart eingesetzt sein, dass Vibrationen des Zweirads (durch Fahrbahnunebenheiten und/oder Motorvibrationen) nicht auf die spiegelnde Fläche übertragen werden bzw. zumindest nicht zu einer Beschädigung der für Bruch anfälligen Spiegelfläche führen. Zudem muss das Gehäuse zum Schutz der spiegelnden Fläche und für deren Befestigung am Gehäuse einen um die Spiegelfläche herum umlaufenden und diese umgreifenden Rand aufweisen.

Die Herstellung der bekannten Rückspiegel ist relativ aufwendig, da das Spiegelglas und das Gehäuse auf verschiedenen Produktionsanlagen hergestellt werden müssen. Anschließend müssen in einem ersten Montageschritt beide montiert und das Spiegelglas in das Gehäuse eingepasst und darin befestigt werden. Zur Schwingungs- und Vibrationsdämpfung wird zwischen dem Spiegelglas und dem Gehäuse üblicherweise ein dämpfendes Material (bspw. Gummi oder Kunststoff) montiert. Dazu sind weitere Herstellungs- und Montageschritte erforderlich.

Das bei herkömmlichen Rückspiegeln verwendete Spiegelglas stellt ein großes Sicherheitsrisiko dar, da bei Bruch des Spiegelglases, bspw. bei einem Unfall sowohl bei ruhendem als auch bei fließendem Verkehr, Personen verletzt werden können. Zudem können Glassplitter eines zu Bruch gegangenen Spiegelglases die Verkehrssicherheit gefährden, wenn sie auf der Fahrbahn liegen, da es zur Reifenplatzern bei Fahrzeugen von anderen Verkehrsteilnehmern kommen kann.

Die Europäische Norm E/ECE/81 regelt die Merkmale und die Herstellung von im Straßenverkehr zugelassenen Rückspiegeln für Zweiräder. Andere einschlägige Normen oder Gesetze für Rückspiegel können in Europa oder in anderen Ländern in Kraft sein. Gemäß der E/ECE/81 muss der um die Spiegelfläche umlaufende Gehäuserand mindestens 2,5 mm breit sein. Die spiegelnde Fläche standardkonformer Rückspiegel muss mindestens 69 cm² betragen. Bei runden Rückspiegeln muss der Durchmesser der spiegelnden Fläche mindestens 94 mm betragen. Bei nicht kreisförmigen Rückspiegeln muss die Spiegelfläche derart dimensioniert und ausgestaltet sein, dass darin ein Kreis mit einem Durchmesser von mindestens 78 mm einbeschrieben werden kann. Insgesamt ergeben sich aufgrund der gesetzlichen Anforderungen an herkömmliche Rückspiegel strenge Vorgaben, die nur wenige Freiheiten bei deren Design lassen. Aus Designgründen werden von Kunden jedoch zunehmend möglichst kleine und filigrane Rückspiegel gewünscht. Im Hinblick auf diesen Wunsch sind bei den bekannten Rückspiegeln enge Grenzen gesetzt.

Aus der US 702,763 A ist ein Lenkerenden-Rückspiegel für Fahrräder bekannt, bei dem die spiegelnde Fläche einstückig mit dem Spiegelgehäuse ausgebildet sein kann.

Ausgehend von dem beschriebenen Stand der Technik liegt der vorliegenden Erfindung die Aufgabe zugrunde, den Zielkonflikt zwischen den gesetzlichen Anforderungen an Rückspiegel, die eine bestimmte Mindestgröße der spiegelnden Fläche fordern, einerseits und dem Wunsch der Kunden nach einem möglichst kleinen Rückspiegel andererseits zu lösen.

Zur Lösung dieser Aufgabe werden ausgehend von dem Verfahren zur Herstellung eines Rückspiegels der eingangs genannten Art die nachfolgenden Verfahrensschritte vorgeschlagen:
- Herstellen eines Rohlings für das Gehäuse aus einem Metall, vorzugsweise aus Aluminium, und
- Ausbilden der spiegelnden Fläche als integraler Bestandteil des Gehäuses durch mechanische Bearbeitung zumindest eines Teils einer Oberfläche des Gehäuses.

Anders als bei den bekannten Spiegeln, bei denen die spiegelnde Fläche durch ein separates Spiegelglas gebildet ist, das in das Spiegelgehäuse eingesetzt wird, ist bei der vorliegenden Erfindung die spiegelnde Fläche integraler Bestandteil des Gehäuses. Die mechanisch bearbeitete Oberfläche des Gehäuses oder der bearbeitete Teil der Oberfläche hat einen Reflexionsgrad, der dem eines herkömmlichen Spiegelglases entspricht oder sogar noch besser ist. Der Reflexionsgrad (auch Reflexionsvermögen, Reflektivität oder Reflektanz) p ist das Verhältnis zwischen reflektierter und einfallender Intensität des Lichts.

Die Vorteile des erfindungsgemäßen Rückspiegels liegen in der besonders einfachen, zeitsparenden und kostengünstigen Herstellung. Es bedarf insbesondere keines separaten Werkzeugbaus für die bei Zweirädern verwendeten Spezial Spiegelgläser und keiner separaten Herstellung und Montage des Spiegelglases. Der gesamte Rückspiegel kann an einer einzigen Arbeitsstation, insbesondere in einer einzigen CNC-Maschine, kostengünstig und flexibel hergestellt werden. Insbesondere eine konvexe Wölbung der Spiegelfläche kann flexibel gefertigt werden, so dass verschiedene Sichtbereiche des Spiegels besonders einfach realisiert werden können. Zudem ist der Rückspiegel auch unter Sicherheitsaspekten deutlich besser als die bisher bekannten Rückspiegel für Zweiräder, da er unzerbrechlich ist. Schließlich erlaubt der Rückspiegel auch ein besonders ansprechendes Design, da er keinen außen um die spiegelnde Fläche herum umlaufenden Rand erfordert, so dass rundum mindestens 2,5 mm an Rand eingespart werden können und er in der Draufsicht somit einen um mindestens 5 mm kleineren Durchmesser aufweisen kann als die herkömmlichen Rückspiegel mit separatem Spiegelglas. Bei runden Rückspiegeln mit einem Durchmesser der spiegelnden Fläche von 94 mm (Gesamtdurchmesser herkömmlicher Spiegel somit 99 mm) entspricht das immerhin einem um mindestens 5% verringerten Durchmesser. Bei nicht runden Spiegeln mit einem einbeschriebenen Kreis mit einem Durchmesser von 78 mm (Minimale Höhe oder Breite herkömmlicher Spiegel somit 83 mm) entspricht das immerhin einer Verringerung der Gesamtfläche des Spiegels um mindestens 6%. Zudem kann der Spiegel auch besonders dünn und insgesamt kompakt ausgebildet werden. Er weist nur ein geringes Gewicht auf, insbesondere wenn entsprechend leichte Materialien für das Gehäuse verwendet werden. Mit Hilfe von verschiedenen, an dem Gehäuse befestigbaren Abdeckungen kann eine schnelle und flexible Individualisierung erzielt werden. Mit Hilfe der Abdeckungen können schließlich auch Halbleiterlichtquellen (LEDs) oder andere elektrische oder elektronische Bauelemente, bspw. eine Kamera, einfach an dem Spiegelgehäuse montiert werden.

Zur Herstellung des Rückspiegels wird zunächst ein Rohling für das Gehäuse hergestellt. Dieser kann aus einem einzigen Materialblock, bspw. aus einem Metall, insbesondere aus Aluminium, bspw. durch mechanische Bearbeitung mit einem geeigneten Schneidwerkzeug, herausgearbeitet werden. Als Schneidwerkzeug kann bspw. ein Fräswerkzeug verwendet werden. Dieser Arbeitsschritt kann in einer CNC-Maschine erfolgen. Der Rohling wird - unabhängig von der gewünschten Außenkontur des fertigen Rückspiegels - vorzugsweise rotationssymmetrisch gefertigt. Der Rohling verfügt vorzugsweise bereits über alle notwendigen Befestigungselemente und andere Details (z.B. dreidimensionale Designelemente, Windabweiser oder Windleitelemente, Vertiefungen und Nuten oder Bohrungen für Lichtquellen und deren elektrischer Versorgung, etc.). Um eine Korrosion des Rückspiegels zu verhindern und um einen gewünschten ästhetischen Eindruck des fertigen Spiegels zu erzielen, wird der fertige Gehäuserohling vorzugsweise eloxiert oder in anderer Weise beschichtet.

Zur Erzeugung der spiegelnden Fläche wird zumindest ein Teil einer Oberfläche des Gehäuserohlings, welche die spiegelnde Fläche bilden soll, wiederum mechanisch bearbeitet. Dies kann in der gleichen Maschine erfolgen, wie die Herstellung des Gehäuserohlings. Die mechanische Bearbeitung zur Herstellung der Spiegelfläche erfolgt vorzugsweise mit einem monokristallinen Diamantschneidwerkzeug. Durch dieses können sehr dünne Schichten des Materials des Rohlings im Bereich von wenigen zehntel Millimetern abgetragen werden. Auf diese Weise entsteht eine spiegelnde Fläche, welche die Anforderungen an eine verzerrungsfrei und mit der gewünschten Effizienz spiegelnde Fläche eines Rückspiegels problemlos erfüllt. Eventuell kann die spiegelnde Fläche abschließend noch poliert oder in anderer Weise mit einem anderen Werkzeug mechanisch bearbeitet werden, um die Spiegelwirkung zu verbessern.

Im Anschluss an die mechanische Bearbeitung des die Spiegelfläche bildenden Teils des Gehäuses wird vorteilhafterweise zumindest der die spiegelnde Fläche bildende Teil des Gehäuses mit einer nach dem Aushärten oder Einbrennen transparenten Schutzschicht beschichtet. Selbstverständlich kann auch der gesamte Rohling mit der spiegelnden Fläche mit der Schutzschicht versehen werden. Die Schutzschicht kann ein aushärtender Flüssiglack oder ein eingebrannter Pulverlack sein. Die Schutzschicht kann aber auch eine in einem Plasma abgeschiedene SiOx-Schicht sein. Die Schutzschicht ist vorzugsweise ausgebildet, die spiegelnde Fläche zumindest vor chemischer oder mechanischer Beanspruchung zu schützen. Eine chemische Beanspruchung kann zu einer Verfärbung oder Ermattung der Spiegelfläche führen und sich bspw. durch Sonneneinstrahlung, insbesondere durch UV-Strahlen, oder durch Korrosion aufgrund von Witterungseinflüssen, insbesondere Feuchtigkeit, ergeben. Eine mechanische Beanspruchung kann sich bspw. durch Sand- oder Staubkörner in Verbindung mit einer wischenden Bewegung auf der Spiegelfläche oder durch spitze oder scharfe Gegenstände ergeben und zu Kratzern führen.

Bei einer Beschichtung des die Spiegelfläche bildenden Teils des Gehäuses kann ein aushärtbarer Lack in einer oder mehreren Schichten aufgetragen werden, bis die gewünschte Schichtdicke aufgebaut ist. Als Lackharze werden solche auf Basis von vernetzbarem Acrylat, Polyester, Polysiloxan verwendet. Es sind Systeme bekannt, bei denen der vorpolymerisierte vernetzbare Kunststoff in organischen Lösungsmitteln gelöst ist. Ferner sind wässrige Systeme auf Acrylatbasis bekannt. Des Weiteren sind lösungsmittelfreie Systeme bekannt, bei denen ein Vorpolymerisat in flüssigen Monomeren gelöst ist. Die als Lösungsmittel verwendeten Monomere werden dann beim Aushärten in die Lackschicht eingebunden.

Bei einer Beschichtung des die Spiegelfläche bildenden Teils des Gehäuses kann ein Pulverlack aufgebrannt werden. Der Pulverlack ist vorzugsweise hochreaktiv und bei relativ niedrigen Temperaturen schmelzend. Derartige Lackpulver schmelzen bei leichter Erwärmung zu einem porenfreien Film mit glatter Oberfläche und verleihen der Spiegelfläche nach ihrer Aushärtung die gewünschten Eigenschaften. Die Steinschlagfestigkeit liegt beispielsweise innerhalb der Vorschriften gemäß TRANS/SCI/WP.29/GRE (Sandstrahlprüfung). Es wird eine hervorragende Haftung des Pulverlacks auf der zu beschichtenden Fläche des Gehäuses erreicht. Dies ergibt sich aus dem Gitterschnittwert, der die DIN 53151 Gt0 (DIN EN ISO 2409) erfüllt. Der Reflexionsgrad der die Spiegelfläche bildenden bearbeiteten Fläche des Gehäuses wird durch die Beschichtung nicht oder nicht merklich beeinträchtigt.

Die Beschichtung besteht bspw. aus einem vernetzten Kunstharz, insbesondere einem Polyacrylat. Es sind aber auch andere Pulverlacksysteme verwendbar, wie solche auf Basis von Polyester oder Polyurethan. Die Schichtdicke der Beschichtung liegt im optischen Bereich der Spiegelfläche in der Regel zwischen 30 und 200 µm, vorzugsweise zwischen 60 und 150 µm, ganz besonders bevorzugt zwischen 80 bis 120 µm. Hohe Schichtdicken geben einen guten Schutz für die Spiegelfläche, wogegen niedrigere Schichtdicken aus Kostengründen bevorzugt sein können oder dort Anwendung finden, wo die Beanspruchung der Spiegelfläche geringer ist. In der Regel liegt die Schichtdicke über 40 µm.

Durch die Ausbildung der Beschichtung sowohl als ausgehärteter Flüssiglack als auch als eingebrannter Pulverlack lassen sich sehr gleichmäßige Schichtdicken erzielen. So können im Zentrum der Spiegelfläche Abweichungen in der Schichtdicke kleiner ±10%, insbesondere kleiner ±5%, gehalten werden. Im Randbereich sind Abweichungen weniger kritisch. Dort wird vorzugsweise ohnehin die Schichtdicke der Beschichtung kleiner gehalten, insbesondere im Bereich zwischen 40 und 60 µm.

Bevorzugt wird ein niedrigschmelzendes Pulverlackmaterial verwendet, das in geschmolzenem Zustand niedrigviskos und hochreaktiv ist. Die geringe Viskosität nach dem Aufschmelzen ergibt einen schnellen und sauberen Verlauf der Schutzschicht. Die starke Reaktionsfähigkeit des Pulvermaterials führt zu einer schnellen Aushärtung, so dass die Heizdauer begrenzt werden kann, was sich einerseits auf den Energiebedarf und andererseits auf die Formstabilität des Gehäuses positiv auswirkt. Vorzugsweise wird ein solches Pulverlackmaterial verwendet, das in geschmolzenem Zustand anfänglich eine Schmelzviskosität von 300 bis 6000 mPa·s, insbesondere 1000 bis 3000 mPa·s besitzt, wobei die Viskosität mit fortschreitender Vernetzung schnell zunimmt. Weiterhin wird mit Vorteil ein Lackpulver verwendet, das bei Temperaturen zwischen 50 und 90°C sintert und bei Temperaturen im Bereich von 70 bis 130°C, insbesondere 80 bis 120°C schmilzt. Die Korngröße des Pulvermaterials ist vorzugsweise kleiner als die gewünschte Schichtdicke der zu bildenden Schicht. Die mittlere Korngröße liegt mit Vorteil im Bereich von 15 bis 55 µm, insbesondere 15 bis 25 µm.

Lackpulver, die zur Ausbildung eines glasklaren farblosen Überzugs geeignet sind, sind an sich bekannt. Bevorzugt sind hochreaktive Acrylharze, die Eypoxygruppen enthalten. Derartige Acrylate können mit organischen Polyanhydriden oder Polysäuren als Härter in hervorragender Weise vernetzt werden. Geeignet sind auch Systeme auf Basis von carboxylgruppenhaltigen Polyestern, die beispielsweise mit Triglycidylisocyanurat vernetzt werden können. Geeignet sind weiterhin Systeme auf Polyurethanbasis.

Die Gehäuse werden zum Einfangen des Lackpulvers und zu dessen Aufschmelzen vorzugsweise jeweils an ihrer zu beschichtenden Oberfläche auf Temperaturen im Bereich von 80 bis 170°C, insbesondere 100 bis 140°C, erwärmt. Die Temperatur der Oberfläche kann dabei mit Pyrometern (Strahlungsthermometer) gemessen werden. Das Aufheizen zur Erzielung der Aufschmelztemperatur kann mittels Heißluft und/oder IR-Bestrahlung vorgenommen werden. Dabei ist Heißluft allein oder eine Kombination von IR-Bestrahlung mit Heißluft bevorzugt. In der Regel ist es vorteilhaft, die Oberfläche der Gehäuse auf mindestens 20°C über die obere Temperatur des Schmelzbereiches des Pulverlackmaterials aufzuheizen. Ein solches Vorwärmen der Gehäuse kann während einer Zeitdauer von 5 bis 60 Minuten, insbesondere 10 bis 15 Minuten, durchgeführt werden.

Die Bepulverung der zu beschichtenden Oberfläche der Gehäuse mit dem Lackpulver wird vorzugsweise in an sich bekannter Weise in einem Luftstrom vorgenommen. Es kann mit üblichen Elektrostatikpistolen gearbeitet werden, wobei jedoch in der Regel keine Spannung angelegt wird. Beispielsweise kann unter folgenden Bedingungen gearbeitet werden: Förderluft 1,7 bar; Dosierluft 5,5 m³/h; Zusatzluft 0,3 m³/h. Die bei der Beschichtung zum Aufschmelzen und Verlaufen des Pulverlacks notwendige Wärmemenge wird, wie oben bereits geschildert, vorzugsweise ausschließlich aus dem vorerwärmten Spiegelgehäuse geliefert. Dabei kann die Erwärmung sogar auf die zu beschichtende Oberfläche des Gehäuses beschränkt werden, so dass gar keine Durchwärmung des Gehäuses erfolgt. Vorzugsweise wird nur die im Gebrauch als spiegelnde Fläche dienende (entgegen der Fahrtrichtung gerichtete) Oberfläche des Gehäuses beschichtet, so dass auch nur diese Oberfläche erwärmt zu werden braucht.

Nach Abkühlen der beschichteten Gehäuse sind die Rückspiegel ohne weitere Behandlung gebrauchsfertig. Die eingebrannten Pulverbeschichtungen haben eine hervorragende optische Qualität und eine einwandfreie Oberfläche. Prüfungen haben ergeben, dass die an Rückspiegel für Zweiräder gestellten Anforderungen hinsichtlich optischer Qualität, mechanischer Beanspruchung und Beständigkeit gegenüber Chemikalien und Lösungsmitteln in hervorragender Weise erfüllt werden.

Gemäß einer vorteilhaften Weiterbildung der Erfindung wird vorgeschlagen, dass das Gehäuse nach der Beschichtung des die spiegelnde Fläche bildenden Teils des Gehäuses mit der Schutzschicht durch mechanische Bearbeitung in seine gewünschte Außenkontur gebracht wird. Rückspiegel mit runder Außenform können direkt aus rotationssymmetrischen, eloxierten Metallrohlingen gefertigt werden. Rückspiegel mit nicht-runder Außenform werden ebenfalls aus rotationssymmetrischen Rohlingen gefertigt. Bei diesen wird jedoch nach der Beschichtung der spiegelnden Fläche die gewünschte Außenkontur hergestellt. Dies kann bspw. durch mechanische Bearbeitung, insbesondere mit einem Fräswerkzeug erfolgen. Dabei kann die gleiche CNC-Maschine verwendet werden wie für die vorangegangenen Bearbeitungsschritte. Dadurch kann der Rückspiegel bzw. dessen Gehäuse und die spiegelnde Fläche in eine nahezu beliebige Form gebracht werden. Gemäß einer bevorzugten Ausführungsform der Erfindung weist das Gehäuse außerhalb des die spiegelnde Fläche bildenden Teils des Gehäuses einen Befestigungsabschnitt zur Befestigung eines proximalen Abschnitts des Befestigungselements auf. Insbesondere ist der Befestigungsabschnitt bei an dem Zweirad befestigtem Rückspiegel an einer in Fahrtrichtung des Zweirads gerichteten Rückseite des Gehäuses oder an einem unteren Rand des Gehäuses ausgebildet. Vorteilhafterweise stehen der Befestigungsabschnitt und der proximale Abschnitt des Befestigungselements derart miteinander in Wirkverbindung, dass ein Verstellen des Rückspiegels relativ zu dem Befestigungselement quer zu einer Haupterstreckungsebene der spiegelnden Fläche möglich ist. Dadurch kann die Orientierung des Rückspiegels bzw. der spiegelnden Fläche justiert werden. Dies kann bspw. mittels eines Kugelkopfes, der an dem proximalen Abschnitt des Befestigungselements ausgebildet ist, realisiert werden. Der Kugelkopf ist in einer entsprechenden Aufnahme an dem Spiegelgehäuse verstellbar gehalten. In diesem Fall ist also der Befestigungsabschnitt als eine Aufnahme für einen Kugelkopf ausgebildet. Das Befestigungselement ist bspw. als ein Haltearm ausgebildet, dessen distales Ende an der Lenkstange oder einer beliebig anderen Stelle des Zweirads, vorzugsweise ebenfalls verstellbar befestigt ist.
Gemäß einer weiteren Ausführungsform der Erfindung wird vorgeschlagen, dass der Rückspiegel außerhalb des die spiegelnde Fläche bildenden Teils des Gehäuses eine an dem Gehäuse befestigte Abdeckung, vorzugsweise aus Kunststoff, aufweist. Besonders bevorzugt erstreckt sich die Abdeckung zumindest über einen Teil einer der spiegelnden Fläche gegenüber liegenden (bei montiertem Rückspiegel in Fahrtrichtung gerichteten) Fläche an der Rückseite des Gehäuses. Durch diese Abdeckung kann auf einfache Weise das Design des Rückspiegels variiert werden, indem die Abdeckung eine bestimmte Form und ein bestimmtes Aussehen (Farbe, Muster, etc.) aufweist. Es ist ferner denkbar, dass die Abdeckung für eine besonders strömungsgünstige Form des Rückspiegels sorgen kann. Außerdem kann die Abdeckung Luftleitelemente und Spoiler umfassen, um die Strömungsgeräusche zu reduzieren.

Gemäß einer anderen vorteilhaften Weiterbildung der Erfindung wird vorgeschlagen, dass der Rückspiegel außerhalb des die spiegelnde Fläche bildenden Teils des Gehäuses mindestens eine Lichtquelle, vorzugsweise eine Halbleiterleiterlichtquelle, aufweist. Die elektrische Versorgung und Ansteuerung der Lichtquelle kann über Leitungen erfolgen, die im Inneren des Befestigungselements und in entsprechenden Kanälen oder Bohrungen im Gehäuse verlaufen und von dem Zweirad zu der Lichtquelle führen. Durch die Lichtquelle können beliebige Leuchtenfunktionen, bspw. Blinklicht, Tagfahrlicht, Positionslicht oder Rücklicht, realisiert werden. Es können auch mehrere Lichtquellen vorgesehen sein, die eine einzige oder verschiedene Leuchtenfunktionen erzeugen. Die Lichtquellen können Licht der gleichen oder unterschiedlicher Farben aussenden. Eine Halbleiterlichtquelle ist besonders kleinbauend und weist eine hohe Effizienz auf.

Schließlich wird vorgeschlagen, dass der Rückspiegel außerhalb des die spiegelnde Fläche bildenden Teils des Gehäuses eine an dem Gehäuse befestigte Abdeckung aus Kunststoff aufweist, die zumindest teilweise transparente Abschnitte aufweist und die derart relativ zu der mindestens einen Lichtquelle positioniert ist, dass von der mindestens einen Lichtquelle ausgesandtes Licht durch die transparenten Abschnitte der Abdeckung hindurchtritt. Die transparenten Abschnitte der Abdeckung dienen somit gleichzeitig als Abdeck- oder Streuscheibe für die in oder an dem Gehäuse angeordneten Lichtquellen.

Weitere Merkmale und Vorteile der vorliegenden Erfindung werden nachfolgend anhand der Figuren näher erläutert, die bevorzugte Ausführungsbeispiele der Erfindung zeigen. Im Einzelnen zeigen:
- Fig. 1: ein bevorzugtes Ausführungsbeispiel eines erfindungsgemäßen Rückspiegels für ein Zweirad in einer Explosionsdarstellung;
- Fig. 2: den erfindungsgemäßen Rückspiegel gemäß Figur 1 in einer Schnittdarstellung;
- Fig. 3: den erfindungsgemäßen Rückspiegel aus den Figuren 1 und 2 in einem an eine Lenkstange des Zweirads montierten Zustand in perspektivischer Ansicht;
- Fig. 4: einen Verfahrensschritt im Rahmen der Herstellung des erfindungsgemäßen Rückspiegels;
- Fig. 5: einen anderen Verfahrensschritt im Rahmen der Herstellung des erfindungsgemäßen Rückspiegels;
- Fig. 6: nochmals einen anderen Verfahrensschritt im Rahmen der Herstellung des erfindungsgemäßen Rückspiegels;
- Fig. 7: einen weiteren Verfahrensschritt im Rahmen der Herstellung des erfindungsgemäßen Rückspiegels;
- Fig. 8: den Verfahrensschritt aus Figur 7 in einer Draufsicht auf den Rückspiegel; und
- Fig. 9: ein anderes bevorzugtes Ausführungsbeispiel eines erfindungsgemäßen Rückspiegels für ein Zweirad in einem an einer Lenkstange des Zweirads montierten Zustand in perspektivischer Ansicht.

Die vorliegende Erfindung betrifft einen Rückspiegel für ein Zweirad sowie ein Verfahren zu seiner Herstellung. Herkömmliche, aus dem Stand der Technik bekannte Rückspiegel haben üblicherweise ein Gehäuse aus Metall oder Kunststoff und ein separates Spiegelglas, das die spiegelnde Fläche des Rückspiegels bildet und in dem Spiegelgehäuse befestigt ist. Zwischen dem Spiegelgehäuse und dem Spiegelglas sind üblicherweise geeignete Dämpfungselemente aus Gummi oder Kunststoff angeordnet, um Vibrationen verursacht durch einen Motor des Zweirads oder durch Fahrbahnunebenheiten, von dem Spiegelglas fern zu halten bzw. nur gedämpft an dieses zu übertragen, so dass eine Beschädigung, insbesondere ein Bruch des Spiegelglases verhindert wird. Die Herstellung eines solchen Rückspiegels ist relativ aufwendig hinsichtlich Material- und Zeitbedarf. Es werden verschiedene Maschinen zur Herstellung des Gehäuses, des Spiegelglases und der Dämpfungselemente benötigt und in einem zusätzlichen Montageschritt müssen die Einzelteile zu dem Rückspiegel montiert werden. Auch unter Sicherheitsaspekten ist der bekannte Rückspiegel problematisch, da bei einem Bruch des Spiegelglases Glassplitter zu einer Verletzung des Zweiradführers oder anderer Personen und zu einer Verkehrsgefährdung durch Reifenplatzer führen können. Außerdem verfügen die herkömmlichen Rückspiegel der genannten Art über einen umlaufenden Rand, um das Spiegelglas besser halten zu können und es über den gesamten Umfang vor Beschädigungen zu schützen. Dadurch sind die herkömmlichen Rückspiegel in der Draufsicht auf die Spiegelfläche unnötig groß. Dies kann aus Design- und Stylinggründen unerwünscht sein.

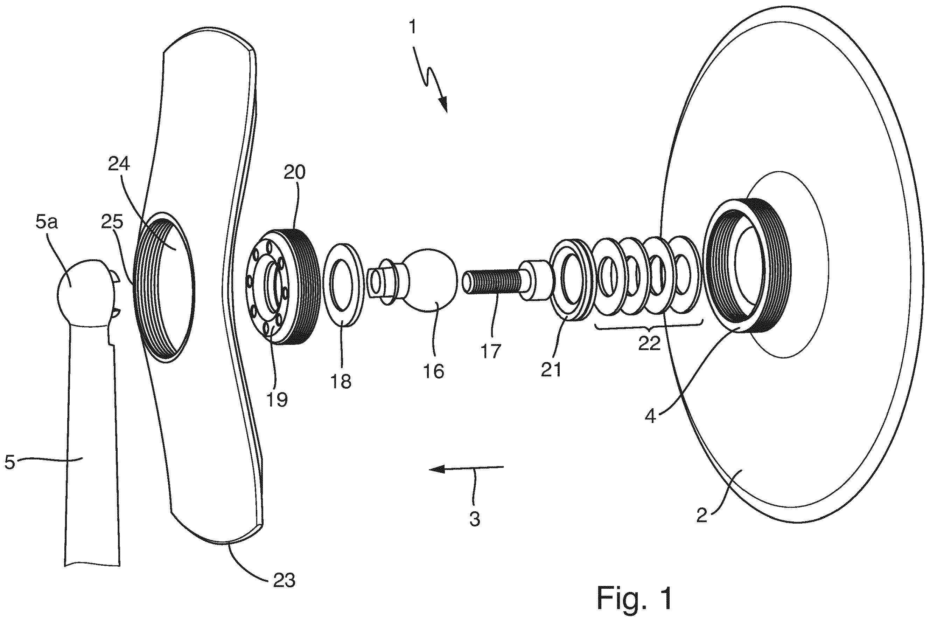

Der erfindungsgemäße Rückspiegel kann hier Abhilfe schaffen. Ein erstes Ausführungsbeispiel eines erfindungsgemäßen Rückspiegels ist in einer Explosionsdarstellung in Figur 1 gezeigt und in seiner Gesamtheit mit dem Bezugszeichen 1 bezeichnet. Der Rückspiegel 1 umfasst ein Gehäuse 2, das an seiner bei montiertem Rückspiegel 1 in Fahrtrichtung 3 gerichteten Rückseite einen Befestigungsabschnitt 4 hat, um das Gehäuse 2 mittels eines Befestigungselements 5 an dem Zweirad, vorzugsweise an einer Lenkstange des Zweirads, zu befestigen. Das Befestigungselement 5 ist vorzugsweise als ein Haltearm ausgebildet, der mit seinem proximalen Abschnitt 5a mittelbar und verstellbar an dem Befestigungsabschnitt 4 des Spiegelgehäuses 2 befestigt ist, so dass die Orientierung des Rückspiegels 1 relativ zu dem Befestigungselement 5 verstellbar ist. Dabei ist die Verstellbarkeit des Rückspiegels 1 vorzugsweise so straff, dass Fahrtwind und leichte mechanische Schläge auf den Spiegel 1 ein Verstellen des Rückspiegels 1 nicht bewirken können. Auf der der Rückseite gegenüberliegenden Vorderseite des Spiegels 1 ist eine spiegelnde Fläche ausgebildet.

Ein wesentlicher Bestandteil des erfindungsgemäßen Rückspiegels 1 ist das Spiegelgehäuse 2. Dieses ist vorzugsweise aus einem einzigen Stück gefertigt. Insbesondere wird vorgeschlagen, dass das Gehäuse 2 aus einem Metall, besonders bevorzugt aus Aluminium gefertigt ist. In einem ersten Verfahrensschritt zur Herstellung des erfindungsgemäßen Rückspiegels 1 wird vorgeschlagen, aus einem einzigen Metallstück einen rotationssymmetrischen Rohling zu fertigen, der dann letzten Endes das Gehäuse 2 bildet. Der Rohling verfügt über alle notwendigen Gewinde und Details, wie bspw. den Befestigungsabschnitt 4. Der fertige Rohling hat also bereits weitgehend die Form des Gehäuses 2 des fertigen Rückspiegels 1. Die Fertigung des Metallrohlings erfolgt in großen Stückzahlen als Massenprodukt, vorzugsweise besonders kostengünstig auf frei am Markt erhältlichen CNC-Maschinen. Selbstverständlich ist es auch denkbar, dass das Gehäuse 2 aus mehreren Teilen besteht bzw. mehrere Teile umfasst, die einzeln gefertigt und dann aneinander befestigt werden, um das Gehäuse 2 zu bilden. Das Gehäuse 2 kann neben dem Metallteil beliebig weitere Teile ebenfalls aus Metall oder aus anderen Materialien, beispielsweise aus Kunststoff, aufweisen, die an dem Metallteil befestigt sind. Nach der Fertigung des Rohlings kann dieser mit einer beliebigen Beschichtung versehen werden. Insbesondere ist daran gedacht, den Rohling zu eloxieren.

Anschließend wird die Spiegelfläche als integraler Bestandteil des Gehäuses 2 an einem Teil des Gehäuses 2 ausgebildet. Vorzugsweise wird die Spiegelfläche an der entgegen der Fahrtrichtung 3 des Zweirads gerichteten Rückseite des Gehäuses 2 ausgebildet. Dies wird nachfolgend im Detail erläutert.

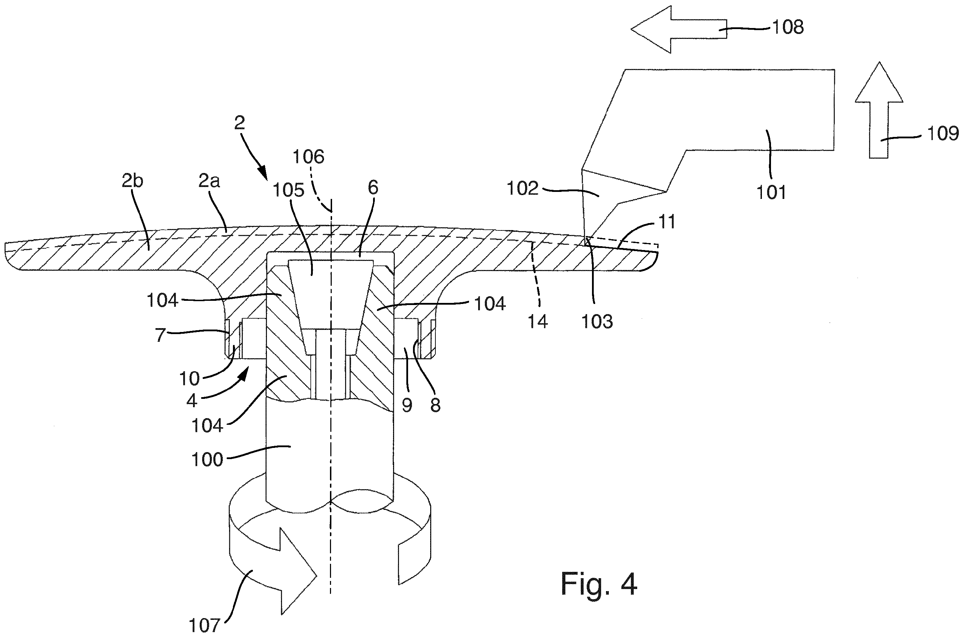

In Figur 4 ist der Rohling, der letzten Endes das Gehäuse 2 bildet, im Schnitt dargestellt. Lediglich der Teil des Rohlings, der die spiegelnde Fläche 11 des Rückspiegels 1 bilden soll, bedarf der weiteren Bearbeitung. An dem Gehäuse 2 ist auf der Rückseite ein Sackloch 6 als Teil des Befestigungsabschnitts 4 ausgebildet, in das ein Haltelement 100 mit in radialer Richtung bewegbaren Haltebacken 104 eingeführt wird. Der Befestigungsabschnitt 4 umfasst neben dem Sackloch 6 ferner eine Vertiefung 9, deren Durchmesser größer als der Durchmesser des Sacklochs 6 ist. Die Vertiefung 9 wird in radialer Richtung durch ein kragenförmiges Element 10 begrenzt. Ein Außengewinde 7 des Befestigungsabschnitts 4 ist an einer äußeren Umfangsseite des kragenförmigen Elements 10 und ein Innengewinde 8 des Befestigungsabschnitts 4 an der inneren Umfangsseite des Elements 10 ausgebildet.

Das Halteelement 100 kann Bestandteil der gleichen CNC-Maschine sein, die bereits für den vorangegangenen Verfahrensschritt genutzt wurde, oder einer anderen CNC-Maschine. Vorzugsweise hat das Halteelement 100 drei Haltebacken 104, auf deren radial nach innen gerichteten Innenseiten schräge Gleitflächen ausgebildet sind, die einen Innenraum mit einem Durchmesser begrenzen, der in einer von dem Gehäuse 2 weg gerichteten Richtung (in Figur 4 von oben nach unten) kleiner wird. In dem von den Haltebacken 104 definierten Innenraum ist ein konusförmiges Spannelement 105 angeordnet, das entlang einer Längs- bzw. Rotationsachse 106 des Halteelements 100 bewegbar ist. Die Halte- oder Spannbacken 104 werden radial nach außen gedrückt, indem das Spannelement 105 in das Halteelement 100 hinein (in Figur 4 nach unten) bewegt wird. Somit ist das Gehäuse 2 an dem Halteelement 100 festgehalten. Zur weiteren Bearbeitung des Gehäuses 2, insbesondere zur Ausgestaltung der spiegelnden Fläche 11 auf der Vorderseite des Gehäuses 2, wird das Halteelement 100 zusammen mit dem daran befestigten Gehäuse 2 in eine Drehbewegung in Richtung 107 um die Längsachse 106 versetzt.

Der Teil des Gehäuses 2, der bei dem fertigen Rückspiegel 1 die spiegelnde Fläche 11 bilden soll, bedarf einer weiteren Bearbeitung. In dem hier gezeigten Beispiel wird die spiegelnde Fläche 11 an der gesamten, im Wesentlichen entgegen der Fahrtrichtung 3 gerichteten Vorderseite des Gehäuses 2 ausgebildet. Zu diesem Zweck wird die gesamte Vorderseite des Gehäuses 2 mittels eines Fräs- oder Schneidwerkzeugs 101 mechanisch bearbeitet, um eine dünne Schicht 2a des Materials des Gehäuses 2 abzutragen, so dass das Material 2b des Gehäuses 2 stehen bleibt. Das Werkzeug 101 kann beispielsweise einen monokristallinen Diamantschneider 102 umfassen, so dass die sich nach dem Abtragen des Materials 2a ergebende spiegelnde Fläche 11 von besonders hoher optischer Güte und Qualität ist. Mit Hilfe eines monokristallinen Diamantschneidwerkzeugs 101, 102 kann insbesondere eine spiegelnde Fläche 11 erzeugt werden, die in Qualität und Güte den optischen Eigenschaften eines herkömmlichen Spiegelglases entspricht, ohne dass es einer weiteren mechanischen Bearbeitung der Spiegelfläche 11, beispielsweise durch Polieren bedarf. Selbstverständlich ist es jedoch auch möglich, dass die spiegelnde Fläche 11 nach dem Abtragen des Materials 2a zur Verbesserung der Güte und Qualität nachbearbeitet wird, beispielsweise durch Polieren. Die Herstellung der spiegelnden Fläche 11 aus dem Rohling kann ebenfalls in einer herkömmlichen CNC-Maschine durchgeführt werden. Vorzugsweise wird dafür die gleiche Maschine verwendet, in der zuvor der Rohling hergestellt wurde. Somit ist es möglich, in ein und derselben CNC-Maschine zunächst den Rohling für das Gehäuse 2 zu fertigen und anschließend die spiegelnde Fläche 11 an der Vorderseite des Rohlings auszugestalten. Das Schneidwerkzeug 101 kann derart relativ zu dem Rohling in Richtungen 108, 109 bewegt werden, dass eine Spitze 103 des Schneidwerkzeugs 101 entlang einer Schneidkante 14 bewegt wird. Durch ein Zusammenwirken der Drehbewegung 107 des Gehäuses 2 um die Drehachse 106 und der Bewegung des Schneidwerkzeugs 101 in die Richtungen 108, 109 wird die Spiegelfläche 11 erzeugt. Die Dicke des auf der Vorderseite des Rohlings abzutragenden Materials 2a beträgt lediglich wenige Zehntel Millimeter. Nach dem Abtragen des Materials 2a des Rohlings wird die spiegelnde Fläche 11 durch das blanke Metallmaterial des Rohlings gebildet.

Die spiegelnde Fläche 11 weist vorzugsweise eine konvexe Wölbung auf. Insbesondere kann die Wölbung um die Achse 106 rotationssymmetrisch ausgebildet sein. Bemerkenswert ist, dass sich die spiegelnde Fläche 11 auf der Vorderseite des Gehäuses 2 bis zum äußeren Rand des Gehäuses 2 erstreckt, so dass die gesamte Vorderseite des Gehäuses 2 die spiegelnde Fläche 11 bildet. Es bleibt somit kein äußerer Randabschnitt des Gehäuses 2 stehen, der die spiegelnde Fläche 11 umfangsseitig umgibt. Der erfindungsgemäße Rückspiegel 1 kann somit trotz Einhaltung aller gesetzlichen Anforderungen an die Mindestgröße der spiegelnden Fläche 11 besonders klein und filigran.

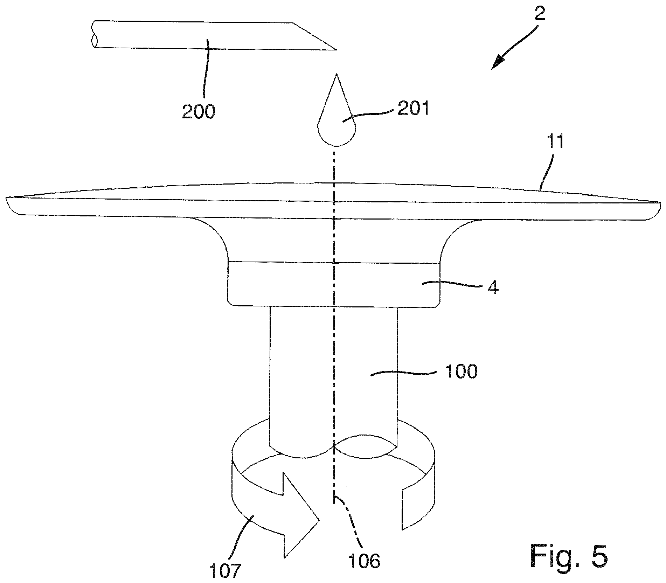

Um trotz chemischer, mechanischer und witterungsbedingter Einflüsse von außen die Beständigkeit der spiegelnden Fläche 11 über einen längeren Zeitraum hinweg zu erhalten, wird auf die spiegelnde Fläche 11 eine Schutzschicht aufgebracht. Ein erstes Beispiel, wie dieser Verfahrensschritt realisiert werden kann, ist in Figur 5 gezeigt. Dort ist das Gehäuse 2 mit der zuvor erzeugten blanken Spiegelfläche 11 weiterhin in der oben beschriebenen Weise an dem Halteelement 100 gehalten und wird in Richtung 107 um die Längs- bzw. Rotationsachse 106 gedreht. Das Halteelement 100 kann Bestandteil der gleichen CNC-Maschine sein, die bereits für die vorangegangenen Verfahrensschritte genutzt wurde, oder einer anderen CNC-Maschine.

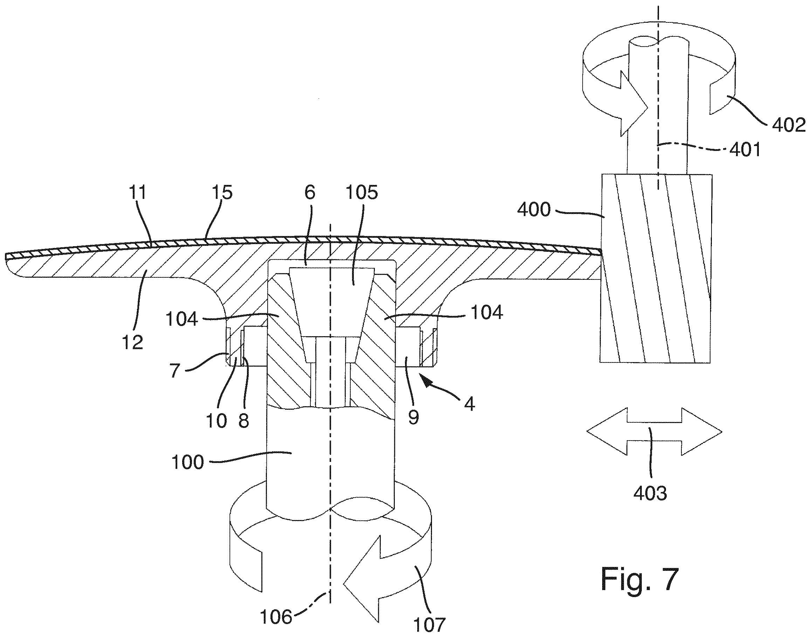

Auf die Vorderseite des Gehäuses 2 bzw. auf die Spiegelfläche 11 ist eine Austrittsöffnung einer Düse 200 gerichtet. Aus der Düse 200 wird ein Flüssiglack 201 in etwa mittig auf die spiegelnde Fläche 11 an der Vorderseite des Gehäuses 2 aufgetragen. Aufgrund der Drehung des Gehäuses 2 um die Achse 106 und die Wirkung der Zentrifugalkräfte fließt der aufgebrachte Flüssiglack 201 von der Mitte der Spiegelfläche 11 zum äußeren Rand hin. Auf diese Weise kann die gesamte Spiegelfläche 11 gleichmäßig mit Flüssiglack bedeckt werden. Die Schichtdicke des Flüssiglacks und damit der resultierenden Schutzschicht 15 (vgl. Figur 7) kann durch die Viskosität des Flüssiglacks 201 sowie durch die Drehzahl des Gehäuses 2 um die Drehachse 106 beeinflusst werden. Die Schichtdicke muss nicht über die gesamte Spiegelfläche 11 konstant sein. Denkbar ist beispielsweise, dass die Schutzschicht 15 in der Mitte der Spiegelfläche 11, etwa im Bereich der Achse 106, eine größere Schichtdicke aufweist, als am äußeren Rand der Spiegelfläche 11.

Der auf der gesamten Spiegelfläche 11 aufgetragene Flüssiglack härtet aus und bildet so die Schutzschicht 15. Der Flüssiglack kann bei Zimmertemperatur oder aber erst durch Erwärmung aushärten. Ebenso ist es denkbar, dass der Flüssiglack erst durch Bestrahlung mit elektromagnetischer Strahlung, beispielsweise im UV-Wellenlängenbereich, aushärtet. Der ausgehärtete Flüssiglack bildet eine transparente Schutzschicht 15, die chemischen und witterungsbedingten Einflüssen standhält. Insbesondere verfärbt sich die Schutzschicht 15 nicht durch Sonneneinstrahlung und ist beständig gegenüber herkömmlichen Reinigungsmitteln und anderen Flüssigkeiten, wie beispielsweise Öl oder Benzin. Ferner weist die Schutzschicht 15 eine große Härte auf, so dass sie nicht so leicht verkratzt.

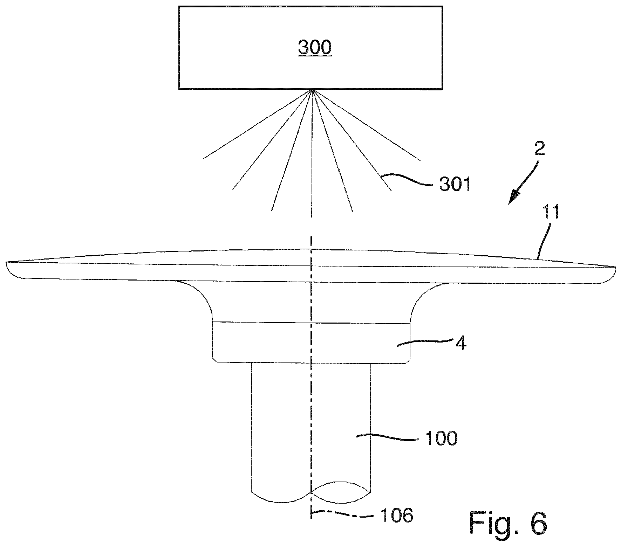

Ein alternatives Verfahren zum Auftrag der Schutzschicht auf die spiegelnde Fläche 11 ist in Figur 6 gezeigt. Dabei kann das Gehäuse 2 nach wie vor in dem Halteelement 100 gehalten sein, wobei eine Rotation des Gehäuses 2 um die Achse 106 nicht erforderlich ist. Es ist jedoch nicht ausgeschlossen, dass das Gehäuse 2, beispielsweise mit niedrigerer Drehzahl als bei dem Ausführungsbeispiel der Figur 5, um die Längs- bzw. Drehachse 106 rotiert. Auf der Vorderseite des Gehäuses 2 ist eine Sprühanlage 300 angeordnet, welche ein die spätere Schutzschicht 15 bildendes Material 301 zerstäubt und auf die gesamte Spiegelfläche 11 aufträgt. Das Material 301 kann - ähnlich wie bei dem Ausführungsbeispiel der Figur 5 - ein Flüssiglack sein, der als feiner Nebel mit kleinen Flüssigkeitströpfchen auf die gesamte Fläche 11 gesprüht wird. Das Aushärten des Flüssiglacks erfolgt dabei wie zuvor bereits für die Figur 5 beschrieben. Denkbar wäre jedoch auch, dass das Material 301 ein Pulverlack ist, der als ein Staubnebel mit kleinen Pulverpartikeln auf die Spiegelfläche 11 aufgetragen wird. Die Pulverpartikel des Pulverlacks können beispielsweise durch Erwärmung schmelzen und anschließend aushärten und so die optisch transparente Schutzschicht 15 bilden. Detaillierte Ausführungen zu dem Pulverlack, der die Schutzschicht 15 bildet, können der Beschreibungseinleitung der vorliegenden Patentanmeldung entnommen werden und sollen hier nicht noch einmal wiederholt werden.

Somit ist das Gehäuse 2 des erfindungsgemäßen Rückspiegels 1 auf seiner Vorderseite mit der spiegelnden Fläche 11 ausgestaltet und diese mit einer Schutzschicht 15 (vergleiche Figur 7) versehen. Das Gehäuse 2 und die spiegelnde Fläche 11 des erfindungsgemäßen Rückspiegels 1 können in einer einzigen CNC-Maschine schnell und kostengünstig hergestellt werden. Selbst die Beschichtung der Spiegelfläche 11 mit einem Flüssiglack oder Pulverlack zur Herstellung der Schutzschicht 15 kann in der gleichen CNC-Maschine erfolgen. Eine aufwendige Montage verschiedener Einzelteile des Rückspiegels 1, wie dies beispielsweise beim Stand der Technik erforderlich ist, wo das Gehäuse mit dem Spiegelglas montiert werden muss, entfällt bei der vorliegenden Erfindung ebenfalls. Zudem ist der erfindungsgemäße Rückspiegel 1 wesentlich sicherer als herkömmliche Rückspiegel, da auf die Verwendung von brüchigem Spiegelglas verzichtet werden kann. Schließlich erlaubt der erfindungsgemäße Rückspiegel 1, ganz neue Designakzente zu setzen, da auf den außen um die Spiegelfläche 11 herum umlaufenden Rand des Gehäuses 2 verzichtet werden kann und der Rückspiegel 1 in der Draufsicht wesentlich kleiner als herkömmliche Rückspiegel ausgebildet werden kann.

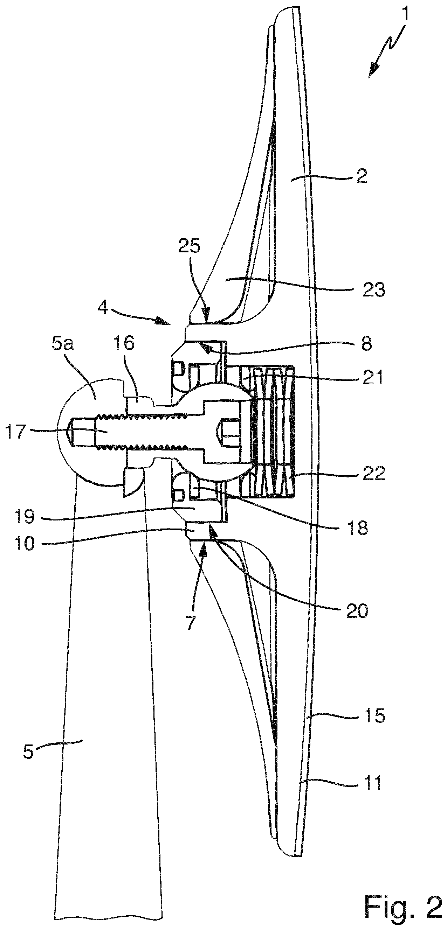

Der fertige Rückspiegel 1 muss nur noch an dem Befestigungselement 5 befestigt werden. Dazu wird ein Kugelkopf 16 mittels einer Schraube 17 an dem proximalen Abschnitt 5a des Befestigungselements 5 festgeschraubt. Zwischen dem Kugelkopf 16 und dem proximalen Abschnitt 5a wird noch eine Unterlegscheibe 18 und ein Gewindering 19 mit einem Außengewinde 20 angeordnet. Das Außengewinde 20 des Gewinderings 19 ist derart bemessen, dass es in das Innengewinde 8 des Befestigungsabschnitts 4 des Gehäuses 2 eingeschraubt werden kann. Dann wird das Gehäuse 2 mit seinem Befestigungsabschnitt 4 auf den Kugelkopf 16 aufgesetzt, wobei ein Gleitlagering 21, der bei montiertem Gehäuse 2 auf der Außenfläche des Kugelkopfes 16 gleitet, und mehrere gewölbte Unterlegscheiben 22 (sog. Federringe oder Federscheiben) zwischen dem Befestigungsabschnitt 4 und dem Kugelkopf 16 angeordnet werden. Die Unterlegscheiben 22 bilden ein Federelement, wie anhand der Figur 2 zu erkennen ist, um die erforderliche Steifigkeit der Verstellung des Rückspiegels 1 relativ zu dem Befestigungselement 5 zu erzielen.

Zur Montage des Rückspiegels 1 an dem proximalen Ende 5a des Befestigungselements 5 wird das Gehäuse 2 mit dem Innengewinde 8 des Befestigungsabschnittes 4 auf das Außengewinde 20 des Gewinderings 19 aufgeschraubt, der - wie gesagt - mittels der Schraube 17 und des Kugelkopfes 16 an dem proximalen Ende 5a des Befestigungselements 5 befestigt ist. Das Federelement 22 ist nun in dem Sackloch 6 des Befestigungsabschnitts 4 angeordnet (vgl. Figur 2). Je fester das Gehäuse 2 auf den Gewindering 19 aufgeschraubt ist, desto größer ist die durch die Unterlegscheiben 22 ausgeübte Federkraft und desto schwerer lässt sich der Rückspiegel 1 relativ zu dem Befestigungselement 5 verstellen.

Schließlich kann auf das Außengewinde 7 des Befestigungsabschnitts 4 des Gehäuses 2 ein Abdeckelement 23 aufgeschraubt werden. Das Abdeckelement 23 kann aus einem beliebigen Material, beispielsweise Kunststoff oder Metall, bestehen. Es kann zudem eine beliebige Form und Farbe aufweisen. In dem dargestellten Ausführungsbeispiel ist das Abdeckelement 23 bogenförmige ausgebildet und besteht aus Metall. Es weist eine Öffnung 24 mit einem Innengewinde 25 auf, das dem Außengewinde 7 des Befestigungsabschnitts 4 entspricht. Das Abdeckelement 23 kann eine fahrtwindleitende und/oder durch Fahrtwind verursachte Geräusche vermindernde Funktion haben. Des Weiteren könnte das Abdeckelement 23 eine stabilisierende Funktion für das Gehäuse 2 haben. Schließlich wäre es auch denkbar, dass das Abdeckelement 23 auch oder ausschließlich Designaspekten dient. Indem unterschiedliche Abdeckelemente 23 an ein und dasselbe Gehäuse 2 eines Rückspiegels 1 befestigt werden, können ganz unterschiedliche Designs des Rückspiegels 1 realisiert werden. Das Abdeckelement 23 kann also verschiedene Aufgaben erfüllen:
- besondere Form für geringen Luftwiderstand und/oder niedrige Windgeräusche des Spiegels 1,
- besondere Form und Oberflächenbeschaffenheit (Muster, Farbe, etc.) für besonderes Design und
- Aufnahme elektrischer Komponenten des Zweirads, einschließlich LEDs zur Realisierung einer Leuchtenfunktion oder einer Kamera zur Realisierung eines Spurhalteassistenten oder eines Collision Prevention Systems für das Zweirad.

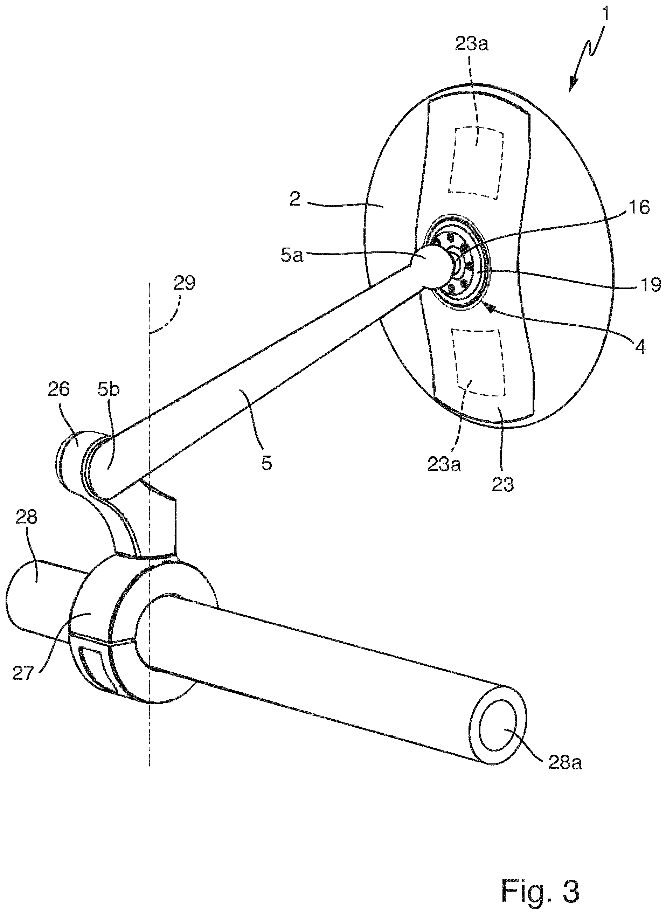

Der Rückspiegel 1 mit dem daran beweglich befestigten Befestigungselement 5 kann über das distale Ende 5b des Befestigungselements 5 an einer beliebigen Stelle an einem Zweirad befestigt werden. In Figur 3 ist ein Ausführungsbeispiel gezeigt, wobei das distale Ende 5b des Befestigungselements 5 über ein entsprechendes Adapterelement 26 und einen daran um eine Drehachse 29 drehbar befestigten Haltering 27 an einer Lenkstange 28 eines Zweirads befestigt ist. Selbstverständlich kann der Rückspiegel 1 auch auf beliebig andere Weise als hier dargestellt, an dem Zweirad befestigt werden. Ebenso ist es denkbar, dass der Rückspiegel 1 an einer anderen Stelle des Zweirads als hier dargestellt, beispielsweise an dem distalen Ende 28a der Lenkstange 28, befestigt ist.

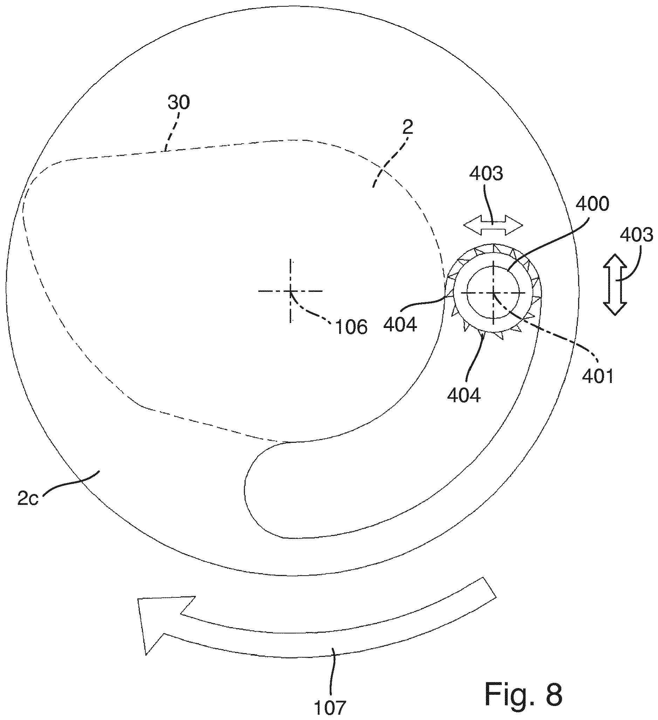

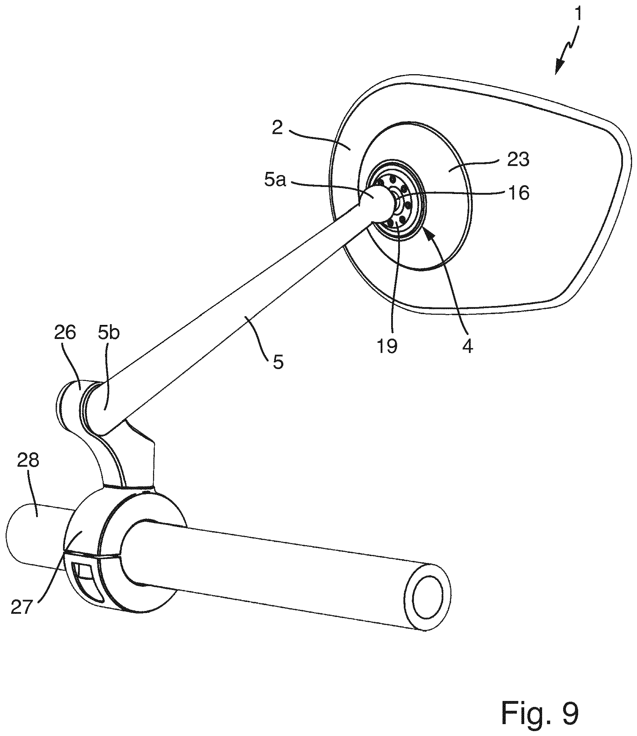

Das bisher beschriebene Ausführungsbeispiel eines erfindungsgemäßen Rückspiegels 1 bezieht sich auf einen Rückspiegel 1 mit einer kreisrunden, rotationssymmetrischen Außenkontur. Die vorliegende Erfindung betrifft jedoch auch Rückspiegel 1, die eine von der Kreisform abweichende beliebige Außenkontur aufweisen. Derartige nicht-kreisförmige Rückspiegel 1 können insbesondere eine ovale, trapezförmige, rechteckige, dreieckige oder eine beliebig andere Außenkontur aufweisen. Ein solcher Rückspiegel ist beispielsweise in Figur 9 gezeigt. Anhand der Figuren 7 und 8 wird nachfolgend beschrieben, wie aus dem rotationssymmetrischen kreisförmigen Rückspiegel 1, der nach den Verfahrensschritten der Figuren 4 bis 6 hergestellt wurde, in einem anschließenden weiteren Verfahrensschritt der nichtrotationssymmetrische Rückspiegel 1 aus Figur 9 oder ein beliebig anderer nichtrotationssymmetrischer Rückspiegel 1 hergestellt werden kann.

Dazu bleibt das Gehäuse 2 mit der an der Vorderseite ausgebildeten spiegelnden Fläche 11 und der darauf aufgebrachten Schutzschicht 15 weiterhin in dem Halteelement 100 der für die vorangegangenen Verfahrensschritte verwendeten CNC-Maschine befestigt. Der nachfolgend beschriebene Verfahrensschritt kann somit ebenfalls in der CNC-Maschine ausgeführt werden, in der bereits vorangegangenen Verfahrensschritte gemäß der Figuren 4 bis 6 ausgeführt wurden. Selbstverständlich kann das Halteelement 100 auch Bestandteil einer anderen CNC-Maschine sein.

Nunmehr kommt ein weiteres materialabtragendes Werkzeug 400 zum Einsatz, das beispielsweise als ein Fräswerkzeug ausgebildet ist, das sich um seine Längs- oder Drehachse 401 dreht. Die Drehbewegung ist beispielhaft in Figur 7 mit dem Pfeil 402 gezeigt. Das Fräswerkzeug 400 kann in der Haupterstreckungsebene der spiegelnden Fläche 11 bewegt werden, so dass vom Umfang des rotationssymmetrischen Gehäuses 2 Material abgetragen werden kann. Die Bewegung des Fräswerkzeugs 400 ist durch einen Doppelpfeil 403 angedeutet. Insbesondere wird das Fräswerkzeug 400 derart in den Richtungen 403 relativ zu dem rotationssymmetrischen Gehäuse 2 bewegt, dass sich eine Schneidkanten 404 des Werkzeugs 400 (vgl. Figur 8) entlang einer gewünschten Außenkontur 30 des nicht-rotationssymmetrischen Rückspiegels 1 bewegt. Auf diese Weise kann Material 2c von dem rotationssymmetrischen Gehäuse 2 entlang der Außenkontur 30 abgetragen werden. Zusätzlich zur Bewegung des Fräsers 400 in den Richtungen 403 kann das Gehäuse 2 um die Dreh- bzw. Längsachse 106 in Richtung 107 gedreht werden. Die Drehung 107 des Gehäuses 2 wirkt derart mit der Bewegung des Fräswerkzeugs 400 zusammen, dass die Schneidkanten 404 entlang der gewünschten Außenkontur 30 bewegt werden.

Nach diesem Bearbeitungsschritt erhält man einen nicht-rotationssymmetrischen Rückspiegel 1 mit einer beliebigen Außenkontur 30, die von der Kreisform abweicht. Ebenso kann auf die beschriebene Weise von dem kreisförmigen Gehäuse 2 Außenmaterial 2c abgetragen werden, um einen wiederum kreisförmigen Rückspiegel 1 zu erhalten, der jedoch einen kleineren Durchmesser als der ursprüngliche kreisförmige Rückspiegel aufweist. In diesem Fall wäre also die Außenkontur 30 ein Kreis mit einem kleineren Durchmesser als der ursprüngliche rotationssymmetrische Spiegel 1. Falls gewünscht, kann die Schnittkante entlang der Außenkontur 30 in einem weiteren Arbeitsschritt, der ebenfalls in der CNC-Maschine ausgeführt werden kann, entgratet oder abgerundet werden. In dem Ausführungsbeispiel der Figur 9 ist beispielsweise die Schnittkante entlang der Außenkontur 30 zur Rückseite (in Fahrtrichtung) des Gehäuses 2 hin abgerundet. Da entlang der Außenkontur 30 nun die auf den Rohling aufgetragene Beschichtung, bspw. die Eloxierschicht, zumindest teilweise zusammen mit dem Material 2c abgetragen wurde, kann das nunmehr wieder blanke Metall nochmals mit einer Beschichtung versehen, insbesondere eloxiert werden.

Im Unterschied zu dem Ausführungsbeispiel aus den Figuren 1 bis 6 ist bei dem nunmehr beschriebenen Ausführungsbeispiel eines erfindungsgemäßen Rückspiegels 1 das Abdeckelement 23 in anderer Weise ausgebildet. Insbesondere ist das Abdeckelement 23 des Rückspiegels aus Figur 9 kuppelförmig ausgebildet und umgibt den gesamten Umfang des kragenförmigen Elements 10 bzw. des Befestigungsabschnitts 4 des Gehäuses 2.

Es ist ferner denkbar, dass das Abdeckelement 23 zumindest abschnittsweise, möglicherweis sogar vollständig aus einem lichtdurchlässigen transparenten Material besteht. Dadurch ist es möglich, dass an der in Fahrtrichtung 3 gerichteten Rückseite des Gehäuses 2 Lichtquellen, insbesondere Halbleiterlichtquellen (LEDs) angeordnet werden können, deren Licht dann durch die transparenten Abschnitte 23a (vgl. Figur 3) oder das gesamte transparente Abdeckelement 23 hindurchstrahlt, um eine beliebige Leuchtenfunktion zu erzeugen. Ferner wäre es denkbar, dass an der Rückseite des Spiegels 1 eine Kamera installiert ist, die durch die transparenten Abschnitte 23a oder das gesamte transparente Abdeckelement 23 hindurch die Fahrbahn vor dem Zweirad erfasst.

Schließlich wird noch darauf hingewiesen, dass die in den Figuren gezeigten und oben beschriebenen Dreh- bzw. Bewegungsrichtungen 107, 108, 109, 402, 403 lediglich beispielhaft angegeben sind und auch anders als hier gezeigt und beschrieben gerichtet sein können.

## Patentansprüche

1. Verfahren zur Herstellung eines Rückspiegels (1) für ein Zweirad, der Rückspiegel (1) umfassend ein Gehäuse (2) und eine spiegelnde Fläche (11), **gekennzeichnet durch** die nachfolgenden Verfahrensschritte:
- Herstellen eines Rohlings für das Gehäuse (2) aus einem Metall, vorzugsweise aus Aluminium, und
- Ausbilden der spiegelnden Fläche (11) als integraler Bestandteil des Gehäuses (2) durch mechanische Bearbeitung mit einem Schneidwerkzeug (101, 102) zumindest eines Teils einer Oberfläche des Gehäuses (2), so dass die spiegelnde Fläche (11) einteilig mit dem Gehäuse (2) ausgebildet ist.

2. Verfahren nach Anspruch 1, **dadurch gekennzeichnet, dass** zumindest auf dem die spiegelnde Fläche (11) bildenden Teil des Gehäuses (2) im Anschluss an die mechanische Bearbeitung eine nach dem Aushärten oder Einbrennen transparente Schutzschicht (15) aufgebracht wird.

3. Verfahren nach Anspruch 2, **dadurch gekennzeichnet, dass** das Gehäuse (2) nach der Beschichtung des die spiegelnde Fläche (11) bildenden Teils des Gehäuses (2) mit der Schutzschicht (15) durch mechanische Bearbeitung in seine gewünschte Außenkontur (30) gebracht wird.

4. Rückspiegel (1) für ein Zweirad, umfassend ein Gehäuse (2) und eine spiegelnde Fläche (11), wobei das Gehäuse (2) zur Befestigung an dem Zweirad mittels eines Befestigungselements (5) ausgebildet ist, **dadurch gekennzeichnet, dass** die spiegelnde Fläche (11) integraler Bestandteil des Gehäuses (2) und einteilig mit diesem durch mechanische Bearbeitung eines Teils des Gehäuses (2) mit einem Schneidwerkzeug (101, 102) ausgebildet ist.

5. Rückspiegel (1) nach Anspruch 4, **dadurch gekennzeichnet, dass** das Gehäuse (2) einteilig aus Metall, insbesondere aus Aluminium, gefertigt ist.

6. Rückspiegel (1) nach Anspruch 5, **dadurch gekennzeichnet, dass** der Rückspiegel (1) nach einem Verfahren gemäß einem der Ansprüche 2 bis 4 hergestellt ist.

7. Rückspiegel (1) nach einem der Ansprüche 4 bis 6, **dadurch gekennzeichnet, dass** der die spiegelnde Fläche (11) des Rückspiegels (1) bildende Teil des Gehäuses (2) im Anschluss an die mechanische Bearbeitung mit einer transparenten Schutzschicht (15) versehen ist, wobei die Schutzschicht (15) ein aushärtender Flüssiglack, ein eingebrannter Pulverlack oder eine in einem Plasma abgeschiedene SiOx-Schicht ist.

8. Rückspiegel (1) nach Anspruch 7, **dadurch gekennzeichnet, dass** die Schutzschicht (15) ausgebildet ist, die spiegelnde Fläche (11) vor chemischer Beanspruchung, insbesondere vor Verfärbung durch Sonneneinstrahlung, ganz besonders durch UV-Strahlen, und vor Korrosion durch Witterungseinflüsse, und vor mechanischer Beanspruchung, insbesondere vor Kratzern, zu schützen.

9. Rückspiegel (1) nach einem der Ansprüche 4 bis 8, **dadurch gekennzeichnet, dass** das Gehäuse (2) außerhalb des die spiegelnde Fläche (11) bildenden Teils des Gehäuses (2) einen Befestigungsabschnitt (4) zur Befestigung eines proximalen Abschnitts (5a) des Befestigungselements (5) aufweist.

10. Rückspiegel (1) nach Anspruch 9, **dadurch gekennzeichnet, dass** der Befestigungsabschnitt (4) und der proximale Abschnitt (5a) des Befestigungselements (5) derart miteinander in Wirkverbindung stehen, dass ein Verstellen des Rückspiegels (1) relativ zu dem Befestigungselement (5) quer zu einer Haupterstreckungsebene der spiegelnden Fläche (11) möglich ist.

11. Rückspiegel (1) nach einem der Ansprüche 4 bis 10, **dadurch gekennzeichnet, dass** der Rückspiegel (1) außerhalb des die spiegelnde Fläche (11) bildenden Teils des Gehäuses (2) eine an dem Gehäuse (2) befestigte Abdeckung (23), vorzugsweise aus Kunststoff, aufweist.

12. Rückspiegel (1) nach Anspruch 11, **dadurch gekennzeichnet, dass** sich die Abdeckung (23) zumindest über einen Teil einer der spiegelnden Fläche (11) gegenüberliegenden Fläche des Gehäuses (2) erstreckt.

13. Rückspiegel (1) nach einem der Ansprüche 4 bis 12, **dadurch gekennzeichnet, dass** der Rückspiegel (1) außerhalb des die spiegelnde Fläche (11) bildenden Teils des Gehäuses (2) mindestens eine Lichtquelle, vorzugsweise eine Halbleiterleiterlichtquelle, aufweist.

14. Rückspiegel (1) nach Anspruch 13, **dadurch gekennzeichnet, dass** der Rückspiegel (1) außerhalb des die spiegelnde Fläche (11) bildenden Teils des Gehäuses (2) eine an dem Gehäuse (2) befestigte Abdeckung (23) aus Kunststoff aufweist, die zumindest teilweise transparente Abschnitte (23a) aufweist und die derart relativ zu der mindestens einen Lichtquelle positioniert ist, dass von der mindestens einen Lichtquelle ausgesandtes Licht durch die transparenten Abschnitte (23a) der Abdeckung (23)

## Claims

1. A method for producing a rearview mirror (1) for a two-wheeled vehicle, the rearview mirror (1) comprising a housing (2) and a reflective surface (11), **characterised by** the following method steps:
- producing a blank for the housing (2) from a metal, preferably from aluminium, and
- forming the reflective surface (11) as an integral component of the housing (2) by mechanically machining at least one part of a surface of the housing (2) using a cutting tool (101, 102) so that the reflective surface (11) is formed in one piece with the housing (2).

2. The method according to claim 1, **characterised in that**, following the mechanical machining, a protective layer (15) which is transparent after curing or baking is applied at least to the part of the housing (2) which forms the reflective surface (11).

3. The method according to claim 2, **characterised in that** the housing (2) is brought into its desired outer contour (30) by mechanical machining after coating of the part of the housing (2) which forms the reflective surface (11) with the protective layer (15).

4. The rearview mirror (1) for a two-wheeled vehicle, comprising a housing (2) and a reflective surface (11), wherein the housing (2) is designed for fastening to the vehicle by means of a fastening element (5), **is characterised in that** the reflective surface (11) is an integral component of the housing (2) and is formed in one piece with same by means of mechanically machining a part of the housing (2) using a cutting tool (101, 102).

5. The rearview mirror (1) according to claim 4, **characterised in that** the housing (2) is produced in one piece from metal, in particular from aluminium.

6. The rearview mirror (1) according to claim 5, **characterised in that** the rearview mirror (1) is produced according to a method according to one of claims 2 to 4.

7. The rearview mirror (1) according to one of claims 4 to 6, **characterised in that**, following the mechanical machining, the part of the housing (2) which forms the reflective surface (11) of the rearview mirror (1) is provided with a transparent protective layer (15), wherein the protective layer (15) is a curing liquid lacquer, a baked powder lacquer or an SiOx layer deposited in a plasma.

8. The rearview mirror (1) according to claim 7, **characterised in that** the protective layer (15) is designed to protect the reflective surface (11) against chemical stress, in particular against discolouration owing to solar radiation, very particularly owing to UV rays, and against corrosion owing to weather conditions, and against mechanical stress, in particular against scratches.

9. The rearview mirror (1) according to one of claims 4 to 8, **characterised in that** the housing (2) outside the part of the housing (2) which forms the reflective surface (11) has a fastening section (4) for fastening a proximal section (5a) of the fastening element (5).

10. The rearview mirror (1) according to claim 9, **characterised in that** the fastening section (4) and the proximal section (5a) of the fastening element (5) are operatively connected to one another in such a manner that an adjustment of the rearview mirror (1) relative to the fastening element (5) is possible transversely with respect to a main plane of extension of the reflective surface (11).

11. The rearview mirror (1) according to one of claims 4 to 10, **characterised in that** the rearview mirror (1) outside the part of the housing (2) which forms the reflective surface (11) has a cover (23), preferably made of plastic, which is fastened to the housing (2).

12. The rearview mirror (1) according to claim 11, **characterised in that** the cover (23) extends at least over a part of a surface of the housing (2) which is opposite the reflective surface (11).

13. The rearview mirror (1) according to one of claims 4 to 12, **characterised in that** the rearview mirror (1) outside the part of the housing (2) which forms the reflective surface (11) has at least one light source, preferably a semiconductor light source.

14. The rearview mirror (1) according to claim 13, **characterised in that** the rearview mirror (1) outside the part of the housing (2) which forms the reflective surface (11) has a cover (23), made of plastic, which is fastened to the housing (2), has at least partially transparent sections (23a) and which is positioned relative to the at least one light source in such a manner that light emitted by the at least one light source passes through the transparent sections (23a) of the cover (23).

## Revendications

1. Procédé de fabrication d'un rétroviseur (1) pour un véhicule à deux roues, le rétroviseur (1) comprenant un boîtier (2) et une surface de miroir (11), **caractérisé par** les étapes de procédé suivantes :
- fabrication d'une ébauche pour le boîtier (2) à partir d'un métal, de préférence l'aluminium et
- formation de la surface de miroir (11) sous forme de partie intégrante du boîtier (2) par usinage mécanique avec un outil de coupe (101, 102) d'au moins une partie de la surface du boîtier (2), de sorte que la surface de miroir (11) soit conçue en une seule pièce avec le boîtier (2).

2. Procédé selon la revendication 1, **caractérisé en ce qu'**une couche de protection transparente après le durcissement ou la cuisson (15) est appliquée au moins sur la partie formant la surface de miroir (11) du boîtier (2) une fois l'usinage mécanique terminé.

3. Procédé selon la revendication 2, **caractérisé en ce que** le boîtier (2) est traité pour obtenir son contour externe (30) souhaité par usinage mécanique après le revêtement de la partie formant la surface de miroir (11) du boîtier (2) avec la couche de protection (15).

4. Rétroviseur (1) pour un véhicule à deux roues, comprenant un boîtier (2) et une surface de miroir (11), dans lequel le boîtier (2) est destiné à être fixé sur le véhicule au moyen d'un élément de fixation (5), **caractérisé en ce que** la surface de miroir (11) est conçue comme une partie intégrante du boîtier (2) et d'une seule pièce avec celui-ci par usinage mécanique d'une partie du boîtier (2) avec un outil de coupe (101, 102).

5. Rétroviseur (1) selon la revendication 4, **caractérisé en ce que** le boîtier (2) est fabriqué d'une seule pièce en métal, notamment en aluminium.

6. Rétroviseur (1) selon la revendication 5, **caractérisé en ce que** le rétroviseur (1) est fabriqué selon un procédé conforme à une des revendications 2 à 4.

7. Rétroviseur (1) selon une des revendications 4 à 6, **caractérisé en ce que** la partie du boîtier (2) formant la surface de miroir (11) du rétroviseur (1) est dotée d'une couche de protection transparente (15) une fois l'usinage mécanique terminé, dans lequel la couche de protection (15) est un vernis fluide durcissable, un vernis en poudre durci par cuisson ou une couche SiOx déposée par plasma.

8. Rétroviseur (1) selon la revendication 7, **caractérisé en ce que** la couche de protection (15) est formée afin de protéger la surface de miroir (11) d'une influence chimique, notamment d'une décoloration provoquée par le rayonnement solaire, tout particulièrement par les rayons UV et de la corrosion par des agents atmosphériques et d'une influence mécanique, notamment des rayures.

9. Rétroviseur (1) selon une des revendications 4 à 8, **caractérisé en ce que** le boîtier (2) présente, en dehors de la partie du boîtier (2) formant la surface de miroir (11), une section de fixation (4) pour la fixation à une section proximale (5a) de l'élément de fixation (5).

10. Rétroviseur (1) selon la revendication 9, **caractérisé en ce que** la section de fixation (4) et la section proximale (5a) de l'élément de fixation (5) sont placées en liaison active l'une par rapport à l'autre de manière à permettre un réglage du rétroviseur (1) par rapport à l'élément de fixation (5) transversalement à un plan d'extension principal de la surface de miroir (11).

11. Rétroviseur (1) selon une des revendications 4 à 10, **caractérisé en ce que** le rétroviseur (1) présente, en dehors de la partie du boîtier (2) formant la surface de miroir (11) un capot (23) fixé sur le boîtier (2), de préférence en matière plastique.

12. Rétroviseur (1) selon la revendication 11, **caractérisé en ce que** le capot (23) s'étend au moins sur une partie de la surface du boîtier (2) opposée à la surface de miroir (11).

13. Rétroviseur (1) selon une des revendications 4 à 12, **caractérisé en ce que** le rétroviseur (1) présente, en dehors de la partie du boîtier (2) formant la surface de miroir (11) au moins une source de lumière, de préférence une source de lumière à semi-conducteurs.

14. Rétroviseur (1) selon la revendication 13, **caractérisé en ce que** le rétroviseur (1) présente, en dehors de la partie du boîtier (2) formant la surface de miroir (11), un capot (23) fixé sur le boîtier (2) en plastique, qui présente des sections (23a) au moins partiellement transparente et qui est positionné par rapport à l'au moins une source de lumière de sorte que la lumière émise par l'au moins une source de lumière passé à travers les sections transparentes (23a) du capot (23).
